# EUROPÄISCHE PATENTSCHRIFT

(11) **EP 0 832 002 B1**
(45) Veröffentlichungstag und Bekanntmachung des Hinweises auf die Patenterteilung: **03.05.2000**
(21) Anmeldenummer: 95924953.3
(22) Anmeldetag: 30.06.1995
(51) Int. Cl.: B60H 3/00

(54) **BELÜFTUNGSEINRICHTUNG FÜR EIN FAHRZEUG**
VEHICLE VENTILATION SYSTEM
DISPOSITIF DE VENTILATION POUR UN VEHICULE

(43) Veröffentlichungstag der Anmeldung: 01.04.1998
(73) Patentinhaber: Tebbe, Gerold, 98000 Monaco (MC)
(72) Erfinder: Tebbe, Gerold, 98000 Monaco (MC)
(74) Vertreter: Ostertag, Reinhard
(86) Internationale Anmeldenummer: EP9502538
(87) Internationale Veröffentlichungsnummer: WO9702151

(56) Entgegenhaltungen:
- EP-A- 0 483 848
- DE-A- 2 355 544
- DE-C- 4 012 568
- DE-U- 8 337 426
- FR-A- 2 609 669
- GB-A- 2 122 103
- PATENT ABSTRACTS OF JAPAN vol. 11 no. 21 (M-555) & JP,A,61 195223 (MATSUSHITA ELECTRIC WORKS LTD)
- DATABASE WPI Week 8837 Derwent Publications Ltd., London, GB; AN 88-262582 & SU,A,1 375 910 (LEPYANKO A P)

## Beschreibung

Die Erfindung betrifft eine Belüftungseinrichtung für ein Fahrzeug, insbesondere einen PKW, gemäß dem Oberbegriff des Anspruches 1.

Eine derartige Belüftungseinrichtung ist in der DE-A-2 355 544 beschrieben. Bei ihr erfolgt ein Zuführen von Sauerstoff in den Fahrgastraum unter Verwendung von in einem Druckbehälter gespeichertem Sauerstoff. Nach Erschöpfung des Sauerstoffvorrates muß der Sauerstoff-Druckbehälter gegen einen vollen Sauerstoff-Druckbehälter ausgetauscht werden. Hierzu muß das Fahrzeug angehalten werden. Auch sind entsprechende Druckbehälter schwer.

Die Belüftungseinrichtungen für Fahrzeuge dienen allgemein dazu, dem Fahrgastraum eines Fahrzeuges Frischluft aus der Umgebung zuzuführen. In derartigen Belüftungseinrichtungen werden in jüngster Zeit auch Ruß- und Pollenfilter verwendet, um die dem Fahrgastraum zugeführte Luft von Schwebstoffen zu befreien.

Es ist ferner bekannt, daß eine erhöhte Sauerstoffzufuhr das Leistungsvermögen des Menschen verbessert. Entsprechende Einrichtungen finden in größerem Umfange bisher aber nur bei der Intensivpflege oder in der Praxis eines Arztes Verwendung.

In der GB-A-2 122 103 ist ferner eine Vorrichtung offenbart, die dazu dient, mit Sauerstoff angereicherte Luft dem Innenraum eines Fahrzeuges zuzuführen. Die Sauerstoffanreicherung erfolgt unter Verwendung von semipermeablen Membranen, denen Umgebungsluft unter Überdruck durch einen Verdichter zugeführt wird. Die am einen Auslaß der Anreicherungseinheit abgegebene sauerstoffangereicherte Luft wird über ein Gebläse in den Innenraum des Fahrzeuges geleitet. Das Gebläse und der Verdichter werden von einem gemeinsamen Antriebsmotor angetrieben. Der apparative Aufwand für die Sauerstoffanreicherung im Fahrgastraum ist somit groß, und das gesamte Aggregat benötigt wegen des angebauten Antriebsmotors einigen Platz.

Durch die vorliegende Erfindung soll eine Belüftungseinrichtung gemäß dem Oberbegriff des Anspruches 1 so weitergebildet werden, daß die Sauerstoffanreicherung im Fahrgastraum mit hoher Sauerstoffanreicherungsrate erfolgt, die Sauerstoff-Anreicherungseinheit dabei aber kleine Abmessungen aufweist.

Diese Aufgabe ist erfindungsgemäß gelöst durch eine Belüftungseinrichtung mit den im Anspruch 1 angegebenen Merkmalen.

Die erfindungsgemäße Belüftungseinrichtung hat den weiteren Vorteil, daß sie mit hohem Wirkungsgrad der Sauerstoffanreicherung arbeitet, da der der Sauerstoff-Anreicherungseinrichtung vorgeschaltete Verdichter direkt mechanisch vom Antriebsmotor des Fahrzeuges her angetrieben wird.

Vorteilhafte Weiterbildungen der Erfindung sind in Unteransprüchen angegeben.

Sauerstoff-Anreicherungseinrichtungen, wie sie im Anspruch 2 angegeben sind, zeichnen sich dadurch aus, daß sie keinerlei chemische Verbrauchsmaterialien benötigen und ausschließlich mit festen, nicht mit flüssigen Materialen arbeiten.

Dabei ist gemäß der Weiterbildung nach Anspruch 3 gewährleistet, daß der Verdichter automatisch abgeschaltet wird, wenn am Einlaß der Sauerstoff-Anreicherungseinrichtung eine ausreichende Menge zu verarbeitender Frischluft ansteht.

Hierbei wird gemäß Anspruch 4 erreicht, daß der Verdichter immer über längere Zeitspannen läuft und dann wieder stillsteht, nicht dauernd ein- und ausgeschaltet wird.

Gemäß Anspruch 5 erhält man auf einfache Weise das Entfernen an Stickstoff angereicherten Restgemisches aus der Sauerstoff-Anreicherungseinrichtung.

Bei der im Anspruch 6 angegebenen Geometrie hat man ein besonders effektives Spülen der Sauerstoff-Anreicherungseinrichtung.

Die Weiterbildung der Erfindung gemäß Anspruch 7 ist im Hinblick auf ein Vermeiden von Störgeräuschen von Vorteil, die ansonsten mit dem Spülen der Sauerstoff-Anreicherungseinrichtung einhergehen würden.

Bei einer Belüftungseinrichtung gemäß Anspruch 8 ist gewährleistet, daß in die Sauerstoff-Anreicherungseinrichtung und gegebenenfalls einen dieser vorgeschalteten Verdichter keine Flüssigkeit gelangt, wie sie vom Frischlufteinlaß bei Regenfahrt aufgesammelt wird.

Bei einer Belüftungseinrichtung gemäß Anspruch 9 kann der Flüssigkeitsabscheider besonders klein bauen, da er keinen großen Sumpf benötigt.

Die Weiterbildung der Erfindung gemäß Anspruch 10 ist im Hinblick auf ein effektives Aufsammeln einer großen Frischluftmenge von Vorteil. Man erhält so auch eine der Querschnittsabnahme entsprechende Erhöhung des Druckes der Luftabgabe des Sammelschachtes, so daß bei hohen Fahrzeuggeschwindigkeiten ein etwa vorgesehener Verdichter nur weniger Arbeit zu leisten braucht, bei sowieso überwiegend für höhere Geschwindigkeiten eingesetzten Fahrzeugen unter Umständen der Verdichter ganz entfallen kann.

Ein Sammelschacht, wie er im Anspruch 11 angegeben ist, läßt sich aufgrund seiner einfach Geometrie besonders einfach herstellen, und sein Luftabgabeende liegt seitlich des Antriebsmotors, wo es besonders einfach mit der Sauerstoff-Anreicherungseinrichtung oder einem dieser vorgeschalteten Verdichter verbunden werden kann.

Bei einer Belüftungseinrichtung gemäß Anspruch 12 kann man zusätzlich den Fahrgastraum mit einem Duftstoff beaufschlagen, was sich ebenfalls günstig auf das Leistungsvermögen des Fahrers auswirkt.

Gemäß Anspruch 13 kann man das Ausbringen des Duftstoffes aus einem Vorratsbehälter auf sehr einfache Weise und gut reproduzierbar vornehmen.

Bei einer Belüftungseinrichtung gemäß Anspruch 14 ist gewährleistet, daß bei geringer Sauerstofferzeugung bevorzugt die Umgebung des Kopfes des Fahrers mit sauerstoffreicher Luft versorgt wird.

Bei einer Belüftungseinrichtung gemäß Anspruch 15 wird automatisch die bei höherer Drehzahl des Fahrzeug-Antriebsmotors vergrößerte Menge an sauerstoffangereicherter Luft den im Fahrzeug verteilten Luftabgabedüsen zugeführt.

Nachstehend wird die Erfindung anhand eines Ausführungsbeispieles unter Bezugnahme auf die Zeichnung näher erläutert. In dieser zeigen:
- Figur 1:: eine Aufsicht auf einen PKW, welcher mit einer Belüftungseinrichtung versehen ist, durch welche dem Fahrgastraum sauerstoffangereicherte Luft zugeführt wird; und
- Figur 2:: ein Blockschaltbild der in Figur 1 gezeigten Belüftungseinrichtung.

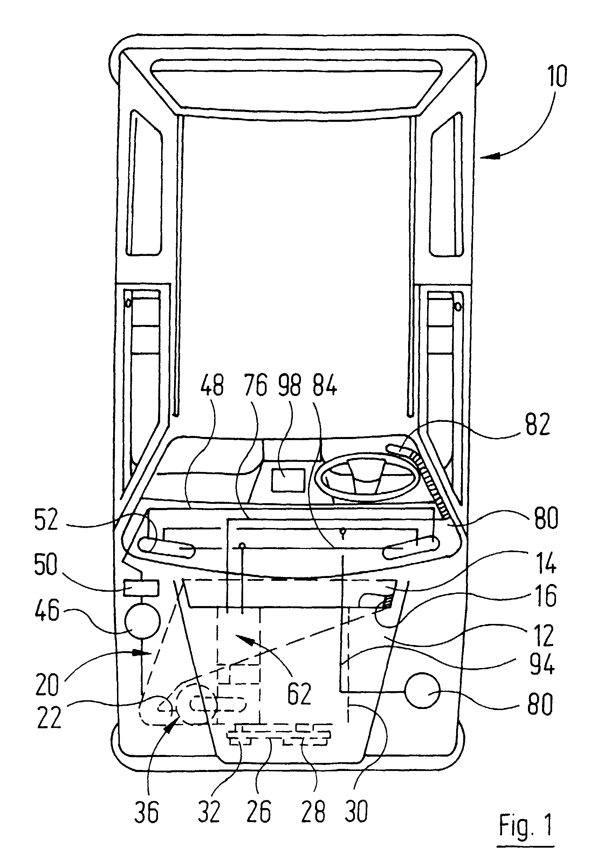

In Figur 1 ist mit 10 ingesamt ein PKW bezeichnet, desse Motorhaube 12 mit einer Windschutzscheibe benachbarten zusätzlichen Hutze 14 versehen ist, welche sich über den größten Teil der Breite der Motorhaube erstreckt und zusammen mit der letzteren einen breiten Frischlufteinlaß 16 begrenzt, dessen Ebene senkrecht auf der Längsmittelebene des Fahrzeuges steht, also zum Fahrtwind hin offen ist.

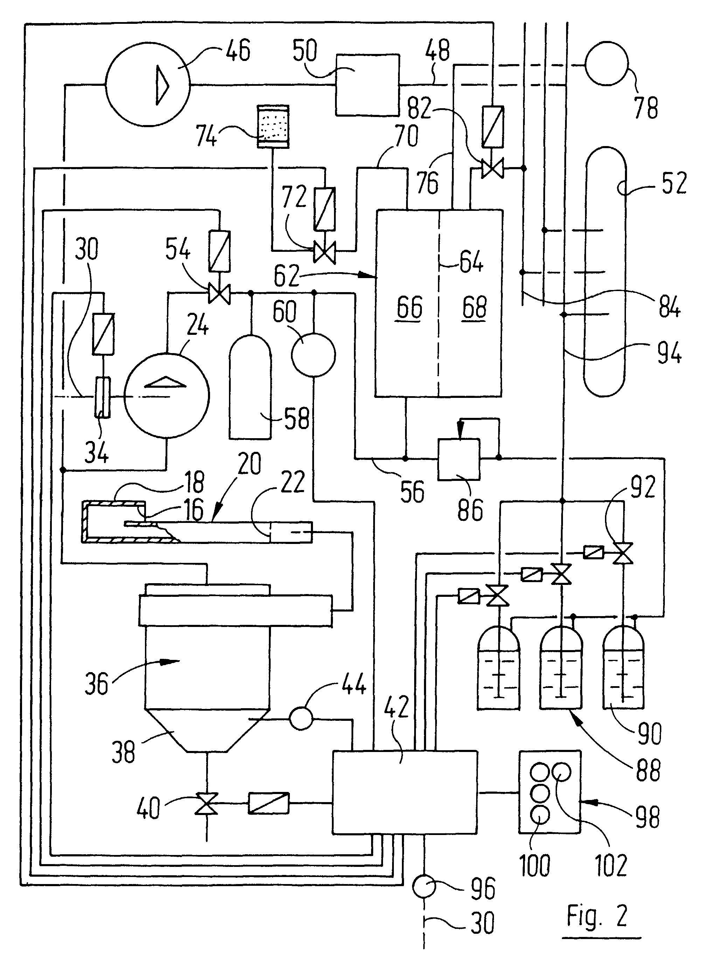

Die Hutze 14 nimmt (vergleiche Figur 2) einen Einlaßabschnitt 18 eines insgesamt mit 20 bezeichneten Sammelschachtes auf, welcher in Aufsicht gesehen die Form eines asymmetrischen V hat, derart, daß sein enges Ende bei der in Figur 1 links gelegenen Seite des Motorraumes des Fahrzeuges liegt. Über einen zur Fahrzeugmittelebene verlaufenden Abgabeabschnitt 22 ist der Sammelschacht 20 mit dem Einlaß eines Verdichters 24 verbunden, der über einen Keilriemen 26 mit einer Riemenscheibe 28 verbunden ist, die auf dem Ende der Kurbelwelle der Brennkraftmaschine 30 des Fahrzeuges sitzt. Eine mit der Welle des Verdichters 24 verbundene Riemenscheibe 32 enthält eine elektromagnetisch betätigte Schaltkupplung, die in Figur 2 bei 34 gezeigt ist.

Dem Verdichter 24 ist ein Zyklon 36 mit vertikaler Achse vorgeschaltet, in welchem flüssige Anteile in der angesaugten Frischluft entfernt werden. Diese flüssigen Anteile sammeln sich in einem Sumpfabschnitt 38 des Zyklon 36, der über ein Magnetventil 40 unter Schwerkrafteinwirkung entleert werden kann. Dies erfolgt durch eine zentrale Steuereinheit 42, die mit einem Pegelfühler 44 zusammenarbeitet, der dem Sumpfabschnitt 38 zugeordnet ist.

Die am Auslaß des Zyklons 36 bereitgestellte Frischluft wird zum Teil über ein herkömmliches Gebläse 46 auf eine Speiseleitung 48 gegeben, in welcher ein mit Kühlwasser durchströmter Wärmetauscher 50 angeordnet ist, um den Fahrgastraum heizen zu können. Die Speiseleitung 48 steht mit verschiedenen Luftabgabedüsen 52 in Verbindung, die standardmäßig in dem PKW vorgesehen sind.

Ein zweiter Anteil der am Auslaß des Zyklons 36 erhaltenen Frischluft wird über den Verdichter 24 und ein Magnet-Schaltventil 54 auf eine Leitung 56 geführt, an welche ein Druckgasspeicher 58, ein Druckwandler 60 sowie ein Einlaß einer insgesamt mit 62 bezeichneten Sauerstoff-Anreichungseinrichtung angeschlossen sind. Letztere ist schematisch als geschlossener Kasten wiedergegeben, der durch eine Membran 64 in zwei Arbeitsräume 66, 68 unterteilt ist. Für die Zwecke der Beschreibung sei angenommen, daß die Membran eine höhere Druchlässigkeit für Sauerstoff als für Stickstoff aufweist. Mit geringfügigen Änderungen läßt sich das Blockschaltbild nach Figur 2 aber auch in Verbindung mit Membranen verwenden, die eine höhere Durchlässigkeit für Stickstoff aufweisen.

In einem dem Einlaß gegenüberliegenden Abschnitt ist der Arbeitsraum 66 mit einer Leitung 70 verbunden, die über ein Magnet-Schaltventil 72 und einen Schalldämpfer 74 mit der Umgebungsatmosphäre in Verbindung steht.

Der mit sauerstoffangereicherter Luft gefüllte Arbeitsraum 68 ist über eine Leitung 76 ständig mit einem biegbarem Abgaberohr 78 verbunden, welches von einem hinter der fahrerseitigen A-Säule der Karosserie liegenden Punkt des Armaturenbrettes 80 des Fahrzeuges ausgeht und vom Fahrer so gebogen werden kann, daß sein Ende in der Nachbarschaft seines Kopfes liegt.

Der Arbeitsraum 68 ist ferner über ein Magnet-Proportionalventil 82 mit einer weiteren Speiseleitung 84 verbunden, die gleichermaßen mit den verschiedenen Luftabgabedüsen 52 des Fahrzeuges verbunden ist. In Abwandlung kann man die Speiseleitung 84 auch an die Speiseleitung 48 anschließen und so die Installation vereinfachen.

Typische Membran-Sauerstoff-Anreicherungseinheiten benötigen im Arbeitsraum 66 einen Druck von 7 bis 8 at, der vom Verdichter 24 bereitgestellt wird. Durch den hohen Druckabfall an der Membran 64, die in der Praxis eine Vielzahl zickzackgefalteter oder gewickelter Lagen aufweist, hat man im Arbeitsraum 68 einen Druck, der nur noch geringfügig über dem atmosphärischen Druck liegt.

Über einen den Druck herabsetzenden Druckregler 86 ist die Leitung 56 ferner mit den Kopfräumen verschiedener Tauchrohr-Vorratsbehälter 88 verbunden, in welchen sich jeweils ein Volumen 90 an in einer Flüssigkeit gelöstem Duftstoff befindet. Die Tauchrohre der Vorratsbehälter 88 sind über Magnet-Proportionalventile 92 mit einer weiteren Speiseleitung 94 verbunden, die ihrerseits in Verbindung mit den Luftabgabedüsen 52 steht. Wiederum kann man alternativ die Speiseleitung 94 an die Speiseleitung 48 anschließen, wie oben stehend für die Speiseleitung 84 schon beschrieben.

Die verschiedenen Magnetventile der oben beschriebenen Belüftungseinrichtung werden von der Steuereinheit 42 gesteuert, welche als Eingangsgrößen neben dem Ausgangssignal des Pegelfühlers 44 das Ausgangssignal eines Drehzahlwandlers 96 erhält, der mit der Welle der Brennkraftmaschine 30 zusammenarbeitet. Ferner erhält die Steuereinheit 42 das Ausgangssignal des Druckwandlers 60 sowie Steuerbefehle, die an einem Befehlsfeld 98 eingegeben werden, welches beispielsweise in die Mittelkonsole des Fahrzeuges integriert ist und Einstellknöpfe 100 zum Dosieren der veschiedenen Duftstoffe und einen Einstellknopf 102 zum Dosieren der Sauerstoffabgabe durch die Luftabgabedüsen 52 aufweist.

Die Steuereinheit 42 arbeitet grob gesprochen folgendermaßen:

Gemäß der Stellung der Einstellknöpfe 100 werden die Porportionalventile 92 gestellt.

Gemäß der Stellung des Einstellknopfes 102 wird das Proportionalventil 82 gestellt, wobei letzteres unter der einschränkenden Bedingung erfolgt, daß der Drehzahlwandler 96 eine so hohe Drehzahl der Brennkraftmaschine 30 anzeigt, daß eine ausreichende Sauerstoffanreicherung für den gesamten Fahrgastraum gewährleistet ist. Ist letzteres nicht der Fall, so wird das Proportionalventil 92 weiter geschlossen als der Stellung des Einstellknopfes 102 entspricht, gegebenenfalls ganz geschlossen, so daß die Umgebung des Kopfes des Fahrers über das Abgaberohr 78 bevorzugt mit zusätzlichem Sauerstoff versorgt wird.

Das Schaltventil 72 wird in regelmäßigen Abständen geöffnet, das Schaltventil 40 bei Anstehen eines Ausgangssignales des Pegelfühlers 44.

Die Schaltkupplung 34 wird ausgerückt, wenn das Ausgangssignal des Drehzahlwandlers 96 einen vorgegebenen Wert unterschreitet.

## Patentansprüche

1. Belüftungseinrichtung für ein Fahrzeug (10), insbesondere einen PKW, mit mit dem Fahrgastraum in Verbindung stehenden Luftabgabedüsen (52), welche über eine Speiseleitung (48) mit einem Frischlufteinlaß (16) verbunden sind, wobei mit dem Frischlufteinlaß (16) oder einem zusätzlichen Frischlufteinlaß eine Sauerstoffquelle verbunden ist, deren Auslaß mit den Luftabgabedüsen (52) und/oder zusätzlichen Luftabgabedüsen (78) verbunden ist, dadurch gekennzeichnet, daß die Sauerstoffquelle durch eine Sauerstoff-Anreicherungseinrichtung (62) gebildet ist, welcher Frischluft über einen Verdichter (24) zugeführt wird und deren mit Sauerstoff angereicherte Luft bereitstellender Auslaß mit den Luftabgabedüsen (52) und/ oder den zusätzlichen Luftabgabedüsen (78) verbunden ist, und daß der Verdichter (24) vom Antriebsmotor (30) des Fahrzeuges (10) angetrieben wird.

2. Belüftungseinrichtung nach Anspruch 1, dadurch gekennzeichnet, daß die Sauerstoff-Anreicherungseinrichtung (62) eine Packung aus einem Folienmaterial umfaßt, welches unterschiedliche Durchlässigkeit für Sauerstoff und Stickstoff aufweist.

3. Belüftungseinrichtung nach Anspruch 1 oder 2, dadurch gekennzeichnet, daß der Verdichter (24) über eine steuerbare Kupplung (34) mit dem Antriebsmotor (30) verbunden ist, die in Abhängigkeit vom Ausgangssignal eines mit dem Einlaß der Sauerstoff-Anreicherungseinrichtung (62) in Verbindung stehenden Druckwandlers (60) geschaltet wird.

4. Belüftungseinrichtung nach Anspruch 3, dadurch gekennzeichnet, daß an den Auslaß des Verdichters (24) ein Druckgasspeicher (58) angeschlossen ist.

5. Belüftungseinrichtung einem der Ansprüche 1 bis 4, dadurch gekennzeichnet, daß ein mit Stickstoff angereichertes Gas enthaltender Arbeitsraum (66) der Sauerstoff-Anreicherungseinrichtung (62) über ein Servoentlüftungsventil (72) periodisch entlüftet wird.

6. Belüftungseinrichtung nach Anspruch 5, dadurch gekennzeichnet, daß der mit dem Entlüftungsventil (72) verbundene Auslaß der Sauerstoff-Anreicherungseinrichtung (62) ihrem mit Frischluft beaufschlagtem Einlaß strömungsmäßig gegenüberliegt.

7. Belüftungseinrichtung nach Anspruch 5 oder 6, dadurch gekennzeichnet, daß der Auslaß des Entlüftungsventiles (72) über einen Schalldämpfer (74) mit der Umgebungsatmosphäre in Verbindung steht.

8. Belüftungseinrichtung nach einem der Ansprüche 1 bis 7, dadurch gekennzeichnet, daß dem Frischlufteinlaß (16) ein Flüssigkeitsabscheider (36), vorzugsweise ein Zyklon, nachgeschaltet ist.

9. Belüftungseinrichtung nach Anspruch 8, dadurch gekennzeichnet, daß ein Sumpfabschnitt (38) des Flüssigkeitsabscheiders (36) über ein Servoablaßventil (40) periodisch mit der Umgebung verbindbar ist.

10. Belüftungseinrichtung nach einem der Ansprüche 1 bis 9, gekennzeichnet durch einen Sammelschacht (20), welcher einen sich über einen großen Teil der Breite des Fahrzeuges (10) erstreckenden, senkrecht auf der Längsmittelebene des Fahrzeuges stehenden Frischlufteinlaß (16) aufweist und welcher sich ausgehend vom Frischlufteinlaß (16) zunehmend verjüngt.

11. Belüftungseinrichtung nach Anspruch 10, dadurch gekennzeichnet, daß der Sammelschacht (20) im wesentlichen gleichbleibende Höhe aufweist und in Aufsicht gesehen im wesentlich die Form eines asymmetrischen V hat.

12. Belüftungseinrichtung nach einem der Ansprüche 1 bis 11, dadurch gekennzeichnet, daß mit dem Luftabgabedüsen (52) und/oder mit zusätzlichen Abgabedüsen der Ausgang mindestens eines Duftgenerators (88) verbunden ist.

13. Belüftungseinrichtung nach Anspruch 12, dadurch gekennzeichnet, daß die Duftgeneratoren (88) jeweils Tauchrohr-Vorratsbehälter aufweisen, dessen Kopfraum über einen den Druck herabsetzenden Druckregler (86) mit dem Ausgang des Verdichters (24) verbunden ist.

14. Belüftungseinrichtung nach einem der Ansprüche 1 bis 13, dadurch gekennzeichnet, daß ein in die Nähe des Kopfes des Fahrers geführtes vorzugsweise biegbares Abgaberohr (78) ständig mit dem sauerstoffangereicherte Luft enthaltenden Arbeitsraum (68) der Sauerstoff-Anreicherungseinrichtung (62) verbunden ist, während im Fahrgastraum verteilte Luftabgabedüsen (52) über eine steuerbare Drossel (82) mit dem genannten Arbeitsraum (68) in Verbindung stehen.

15. Belüftungseinrichtung nach Anspruch 14, dadurch gekennzeichnet, daß die steuerbare Drossel (82) in Abhängigkeit vom Ausgangssignal eines mit dem Antriebsmotor (30) des Fahrzeuges (10) zusammenarbeitenden Drehzahlwandlers (96) betätigt wird.

## Claims

1. Ventilation system for a vehicle (10), in particular a passenger car, with air discharge nozzles (52), which communicate with the passenger compartment and are connected via a feed line (48) to a fresh air inlet (16), wherein an oxygen source is connected to the fresh air inlet (16) or an additional fresh air inlet, the outlet of which source is connected to the air discharge nozzles (52) and/or additional air discharge nozzles (78), characterised in that the oxygen source is formed by an oxygen enrichment system (62), which is supplied with fresh air via a compressor (24) and whose outlet, which provides oxygen-enriched air, is connected to the air discharge nozzles (52) and/or the additional air discharge nozzles (78), and that the compressor (24) is driven by the drive engine (30) of the vehicle (10).

2. Ventilation system according to Claim 1, characterised in that the oxygen enrichment system (62) comprises a packing of a film material exhibiting differing permeability to oxygen and nitrogen.

3. Ventilation system according to Claim 1 or 2,
characterised in that the compressor (24) is connected to the drive engine (30) via a controllable clutch (34), which is engaged in accordance with the output signal of a pressure transducer (60) communicating with the inlet of the oxygen enrichment system (62).

4. Ventilation system according to Claim 3, characterised in that a compressed-gas store (58) is joined to the outlet of the compressor (24).

5. Ventilation system according to any one of Claims 1 to 4, characterised in that a working compartment (66), containing nitrogen-enriched gas, of the oxygen enrichment system (62) is periodically vented via a servo vent valve (72).

6. Ventilation system according to Claim 5, characterised in that the outlet, which is connected to the vent valve (72), of the oxygen enrichment system (62) lies opposite its inlet, to which fresh air is admitted, in terms of flow.

7. Ventilation system according to Claim 5 or 6,
characterised in that the outlet of the vent valve (72) communicates with the ambient atmosphere via a sound absorber (74).

8. Ventilation system according to any one of Claims 1 to 7, characterised in that a liquid separator (36), preferably a cyclone, is disposed downstream of the fresh air inlet (16).

9. Ventilation system according to Claim 8, characterised in that a sump section (38) of the liquid separator (36) can communicate periodically with the environment via a servo drain valve (40).

10. Ventilation system according to any one of Claims 1 to 9, characterised by a collecting shaft (20) comprising a fresh air inlet (16), which extends over a large part of the width of the vehicle (10) and is perpendicular to the longitudinal centre plane of the vehicle, and increasingly tapering from the fresh air inlet (16).

11. Ventilation system according to Claim 10, characterised in that the collecting shaft (20) is at a substantially constant level and, in plan view, substantially in the form of an asymmetrical V.

12. Ventilation system according to any one of Claims 1 to 11, characterised in that the outlet of at least one perfume generator (88) is connected to the air discharge nozzles (52) and/or to additional discharge nozzles.

13. Ventilation system according to Claim 12, characterised in that the perfume generators (88) each comprise an immersion pipe reservoir, the top space of which is connected via a pressure regulator (86), which reduces the pressure, to the outlet of the compressor (24).

14. Ventilation system according to any one of Claims 1 to 13, characterised in that a preferably flexible discharge pipe (78), which is led into the vicinity of the driver's head, is permanently connected to the working compartment (68), which contains oxygen-enriched air, of the oxygen enrichment system (62), while air discharge nozzles (52) distributed in the passenger compartment communicate via a controllable throttle valve (82) with the above-mentioned working compartment (68).

15. Ventilation system according to Claim 14, characterised in that the controllable throttle valve (82) is operated in accordance with the output signal of a speed transducer (96) co-operating with the drive engine (30) of the vehicle (10).

## Revendications

1. Dispositif de ventilation pour un véhicule (10), notamment pour une voiture particulière, avec des buses (52) de délivrance d'air communiquant avec l'habitacle, qui sont reliées par l'intermédiaire d'une conduite d'alimentation (48) à une admission d'air frais (16), une source d'oxygène étant reliée à l'admission d'air frais (16) ou à une admission d'air frais supplémentaire, source dont la sortie est reliée aux buses (52) de délivrance d'air et/ou à des buses supplémentaires (78) de délivrance d'air,
**caractérisé** en ce que la source d'oxygène est formée par un dispositif (62) d'enrichissement en oxygène, qui est alimenté en air frais par l'intermédiaire d'un compresseur (24) et dont la sortie fournissant de l'air enrichi en oxygène est reliée aux buses (52) de délivrance d'air et/ou aux buses supplémentaires (78) de délivrance d'air, et en ce que le compresseur (24) est entraîné par le moteur d'entraînement (30) du véhicule (10).

2. Dispositif de ventilation selon la revendication 1, **caractérisé** en ce que le dispositif (62) d'enrichissement en oxygène contient une charge de matériau pelliculaire, qui présente une perméabilité différente à l'oxygène et à l'azote.

3. Dispositif de ventilation selon la revendication 1 ou 2, **caractérisé** en ce que le compresseur (24) est relié au moteur d'entraînement (30) au moyen d'un embrayage asservissable (34), qui est actionné en fonction du signal de sortie d'un transducteur de pression (60) relié à l'admission du dispositif (62) d'enrichissement en oxygène.

4. Dispositif de ventilation selon la revendication 3, **caractérisé** en ce qu'un accumulateur de gaz sous pression (58) est raccordé à la sortie du compresseur (24).

5. Dispositif de ventilation selon une des revendications 1 à 4, **caractérisé** en ce qu'une chambre de travail (66) du dispositif (62) d'enrichissement en oxygène, contenant du gaz enrichi en azote, est périodiquement mise à l'atmosphère au moyen d'une servo-soupape (72) de mise à l'atmosphère.

6. Dispositif de ventilation selon la revendication 5, **caractérisé** en ce que la sortie du dispositif (62) d'enrichissement en oxygène, reliée à la soupape (72) de mise à l'atmosphère, est fluidiquement opposée à son admission, alimentée en air frais.

7. Dispositif de ventilation selon la revendication 5 ou 6, **caractérisé** en ce que la sortie de la soupape (72) de mise à l'atmosphère est reliée à l'atmosphère ambiante par l'intermédiaire d'un silencieux (74).

8. Dispositif de ventilation selon une des revendications 1 à 7, **caractérisé** en ce qu'un séparateur de liquide (36), de préférence un cyclone, est monté à la suite de l'admission d'air frais (16).

9. Dispositif de ventilation selon la revendication 8, **caractérisé** en ce qu'une partie de carter inférieur (38) du séparateur de liquide (36) peut être périodiquement reliée à l'environnement par l'intermédiaire d'une servo-soupape de décharge (40).

10. Dispositif de ventilation selon une des revendications 1 à 9, **caractérisé** par un puits collecteur (20), qui présente une admission d'air frais (16) perpendiculaire au plan médian longitudinal du véhicule et s'étendant sur une grande partie de la largeur du véhicule (10), et qui se rétrécit de plus en plus à partir de l'admission d'air frais (16).

11. Dispositif de ventilation selon la revendication 10, **caractérisé** en ce que le puits collecteur (20) présente une hauteur essentiellement constante et possède, vu de dessus, essentiellement la forme d'un V asymétrique.

12. Dispositif de ventilation selon une des revendications 1 à 11, **caractérisé** en ce que la sortie d'au moins un générateur de parfum (88) est reliée aux buses (52) de délivrance d'air et/ou aux buses supplémentaires.

13. Dispositif de ventilation selon la revendication 12, **caractérisé** en ce que les générateurs de parfum (88) présentent chacun un réservoir à tube plongeur, dont la chambre de tête est reliée à la sortie du compresseur (24) par l'intermédiaire d'un régulateur de pression (86) diminuant la pression.

14. Dispositif de ventilation selon une des revendications 1 à 13, **caractérisé** en ce qu'un conduit de délivrance (78) de préférence flexible, amené près de la tête du conducteur, est relié en permanence à la chambre de travail (68) du dispositif (62) d'enrichissement en oxygène contenant de l'air enrichi en oxygène, tandis que des buses (52) de délivrance d'air réparties dans l'habitacle sont reliées à cette chambre de travail (68) par l'intermédiaire d'un moyen d'étranglement asservissable (82).

15. Dispositif de ventilation selon la revendication 14, **caractérisé** en ce que le moyen d'étranglement asservissable (82) est actionné en fonction du signal de sortie d'un transducteur de régime (96) collaborant avec le moteur d'entraînement (30) du véhicule (10).
